# EUROPEAN PATENT APPLICATION

(11) **EP 4 502 127 A1**
(43) Date of publication of application: **05.02.2025**
(21) Application number: 22934994.9
(22) Date of filing: 21.12.2022
(51) Int. Cl.: C11C 3/10, A23D 9/00

(54) **COCOA BUTTER EQUIVALENT FOR USE AS AN EXTENDER AND OBTAINING PROCESS THEREOF**

(30) Priority: 28.03.2022 US 202263324456 P
(71) Applicant: ALIANZA TEAM INTERNATIONAL S.A., Bogotá (CO)
(72) Inventor: AVILA AVILA, María de la Salud,, 58149 México (MX)
(74) Representative: ZBM Patents - Zea, Barlocci & Markvardsen
(86) International application number: PCT/IB2022/062562
(87) International publication number: WO 2023/187462

(57) **Abstract**

The present invention relates to a cocoa butter equivalent made of palm oils and fractions thereof, and a process of obtaining said cocoa butter equivalent which involves the chemical interesterification of the oils. Furthermore, the present invention relates to the use of said cocoa butter equivalent as an extender of cocoa butter and equivalents thereof in the production of chocolate products.

## Description

### TECHNICAL FIELD OF THE INVENTION

The present invention relates to cocoa butter equivalents, particularly cocoa butter equivalent extenders, made of vegetable oils and/or fractions thereof. The present invention also relates to process of obtaining cocoa butter equivalents, including cocoa equivalent extenders, wherein modifying techniques are employed for achieving the desired triglyceride profile in the obtained product.

### TECHNICAL BACKGROUND

Cocoa butter is a fat traditionally used in the production of chocolate for its desirable characteristics, including gloss and snap ability, as well as sensory attributes (such as mouthfeel and flavor release), which are imparted to the final product.

Particularly, the capability of cocoa butter of being solid and crystalline at 20°C enables it to melt in the mouth at body temperature, which is desirable when making cocoa butter. However, the production of this component is low due to the pest attacks and difficulties in cocoa cultivation, making its production non profitable.

Due to this problem, a lot of research has been carried out to produce alternatives to cocoa butter (CBA), wherein the cocoa butter equivalents (CBEs) are attracting a lot of interest as they have physical and chemical properties similar to cocoa butter and they are easily obtained for being made of vegetable fats from different sources, including shea, kokum, illipe or mango stearins, which are rich in stearic acid and SOS and are usually mixed with the palm middle fractions rich in POP. Said CBEs seeks replacing the use of cacao butter, and also, they can be used as extenders for extending cocoa butters or other CBEs since they exhibit suitable physicochemical properties for those purposes.

This is the case of application GB2084170A, wherein cocoa butter substitutes are prepared by mixing a fat A having more that 40% of C16-C18 fatty acids, wherein the fats are selected from shea butter, mango kernel fat, Borneo tallow (Shorea stenoptera or Pentadesma butyracea), sal (Shorea robusta), kokum (Garcinia indica) and mahua (Madhuca latifolia), with a second fat, which is palm oil having more than 50% of POP triglycerides and less than 1% of trisaturated triglycerides.

Likewise, application CN110831441A relates cocoa extender compositions comprising cocoa residues, karite butter, and added vegetable and non-vegetable fats, wherein said fat-based compositions are used for replacing cocoa powder without affecting its taste or color.

Despite of the above, some of the sources used for producing CBEs require fractionation processes which affects the yield of the obtaining process and, consequently, increases the costs of production.

Accordingly, it has been studied the use of fats from common and widely produced sources, for example, palm, which have been submitted to refining or fractioning processes for producing the desired fatty acid proportions.

For example, application US20160066594 reveals a non-lauric non-trans fat composition having a content of C8-C12 saturated fats up to 3%, C16-C20 unsaturated fats between 10% and 60%, C14-C20 saturated fats between 40% and 90%, an SSS content between 4% and 15%, a S2U content 50% or less, and a SU2 + UUU content of 30% to 80%, where S and U represent fatty acids of 16 carbons or more, wherein fractionated palm oil (for example, palm stearin), hydrogenated palm oil, or mixtures thereof are used.

In the same way, application JPH11318339A discloses oil blends suitable in food products as cocoa butter substitutes, which comprises palm kernel oil, hydrogenated palm kernel oil, palm kernel stearin and hydrogenated palm kernel stearin.

Notwithstanding, it is usually required more than one fractioning or refining processes for obtaining the desired product, thus increasing the cost of the CBE production. Consequently, it is also contemplated the possibility of modifying or engineering fats in order to finally obtain a product with the desired properties and, at the same time, improving the yield of the process, wherein the most common process are hydrogenation and transesterification of triglycerides, which allows obtaining specific amounts of fatty acids within the fats that provides the needed features, and involves catalysts, enzymes, etc.

For example, application EP2352382B1 refers to enzymatic interesterification of a mixture of a hard fat with an oil, wherein 1,3-regiospecific enzymes are used for obtaining a higher content of SOS triglycerides and a posterior distillation process for removing the remained free fatty acids, mono- and diglycerides from the composition, and wherein the fats used include completely hydrogenated soybean oil, completely hydrogenated suet, palm oil, palm stearin oil, palm olein oil, palm nuclei oil, palm nuclei olein oil, hydrogenated coconut oil, coconut oil, sal fat, sal stearin oil, kokum fat, shea butter, shea stearin oil, cottonseed stearin oil, soybean oil, corn oil, cottonseed oil, rape seed oil, canola oil, sunflower oil, safflower oil, grape seed oil or olive oil.

On the other hand, application CN103815104A reveals a method for preparing cocoa butter equivalent using a chemical transesterification mediated by a catalyst such as sodium methoxide or ethoxide. For said method, sheep oil, palm oil and methyl stearate are firstly mixed, and, subsequently, a high-performance catalyst and citric acid are added, and finally, the composition is dried and purified.

Likewise, patent EP1490463B1 relates to the production process of a non-tempering fat composition, for use in confectionary, filling fats, water-in-oil emulsions and doughs, starting from a fat composition containing palm oil or a fraction thereof. Said process involves the mixture of palm oil or fractions thereof, wherein said fraction can be palm stearin, said mixture being submitted to a catalytic hydrogenation reaction in order to reduce trans fatty acid levels until less than 15% w/w. The starting material can be previously submitted to interesterification processes in order to adjust its triglyceride composition as desired.

Considering all the above, there is a need to provide a CBE, wherein accessible raw materials, such as palm oil or fractions thereof, and simpler manufacturing processes are employed for reducing manufacturing costs, and wherein the final product exhibits desirable physicochemical properties for it to replace cocoa butter or to be combined as an extender with other CBEs or cocoa butter in the production of chocolate products.

### GENERAL DESCRIPTION OF THE INVENTION

The present invention is related to a CBE which manufacturing costs are reduced compared to other CBEs already known in the technical field of the invention, and which final function profile is desirable for replacing cocoa butter in chocolate preparations, and also for being used as an extender of other CBEs and cocoa butter.

Specifically, the CBE of the present invention is obtained from vegetable oils, specifically palm oil and/or fractions thereof, which excludes the use of any exotic fat, thus reducing raw material costs and making the product of the invention more economically competitive in the market.

Likewise, the CBE of the invention is obtained by a process including the following general steps:
1. Blending one or more of palm oil and/or fractions thereof;
2. Chemical interesterification; and
3. Physical refining of the interesterified product.

By employing a chemical interesterification step, no significant losses are produced (high final product yield) and the manufacturing costs are reduced in comparison to other processes known in the industry.

Moreover, through the chemical interesterification process, the fatty acids are rearranged within the glycerol molecule, which results in a high compatibility with cocoa butter by increasing triglyceride levels, mainly POP, finally helping to improve the structure of the final chocolate product.

Specifically, the CBE of the invention comprises the following triglyceride profile: PPP from about 11% to about 13% w/w of the total weight of the equivalent; POP from about 25% to about 30% w/w of the total weight of the equivalent; POS from about 5% to about 7% w/w of the total weight of the equivalent; SOO from about 1.5% to about 5% w/w of the total weight of the equivalent; and SOS from about 0.1% to about 2.5% w/w of the total weight of the equivalent.

Furthermore, and with the manufacture process of the present invention, no further steps aimed to seek a determined structure or crystalline form are required since the desired structure is obtained during the mixture and interesterification steps.

Therefore, the CBE of the invention exhibits a final functional profile similar to cocoa butter or equivalents thereof, such that it is miscible with other CBEs and cocoa butter, thus being an excellent candidate as an extender of said fat products.

Accordingly, the CBE of the present invention is used as a cocoa butter alternative or as an extender of cocoa butter or equivalents thereof.

### DETAILED DESCRIPTION OF THE INVENTION

The process of the invention for obtaining the above-mentioned CBE comprises a first step of blending one or more palm oils or fractions thereof, wherein the palm oils or fractions thereof are selected from raw palm oil, refined, bleached, and deodorized (RBD) palm oil, palm stearin, palm olein, partially hydrogenated raw palm oil, partially hydrogenated RBD palm oil, partially hydrogenated palm stearin, fully hydrogenated raw palm oil, fully hydrogenated RBD palm oil, fully hydrogenated palm stearin, or any other palm oil fraction not included in this list.

In a preferred embodiment of the invention, the palm oils or fractions thereof are selected from raw palm oil, RBD palm oil, palm stearin, fully hydrogenated raw palm oil, fully hydrogenated RBD palm oil, or fully hydrogenated palm stearin. In a more preferred embodiment, the palm oils or fractions thereof are selected from RBD palm oil, palm stearin, fully hydrogenated raw palm oil or fully hydrogenated RBD palm oil.

In the process of the invention, at least two palm oils or fractions thereof are used in the first step of blending. In a particular embodiment, at least three palm oils or fractions thereof are used in the first step of blending. In a more particular embodiment, three palm oils or fractions thereof are used in the first step of blending.

In one embodiment of the invention, a first component of the blend is a palm oil or fraction thereof in a percentage of at least 60% w/w of the total weight of the blend. In a preferred embodiment, the first component is in a percentage of at least 70% w/w of the total weight of the blend. In a more preferred embodiment, the first component is in a percentage of at least 80% w/w of the total weight of the blend. In another embodiment, the first component is in a percentage of up to 90% w/w of the total weight of the blend. In even another embodiment, the first component is in a percentage of up to 85% w/w of the total weight of the blend.

In one embodiment of the invention, a second component of the blend is a palm oil or fraction thereof in a percentage of at least 5% w/w of the total weight of the blend. In a preferred embodiment, the second component is in a percentage of at least 10% w/w of the total weight of the blend. In a more preferred embodiment, the second component is in a percentage of at least 13% w/w of the total weight of the blend. In another embodiment, the second component is in a percentage of up to 20% w/w of the total weight of the blend. In even another embodiment, the second component is in a percentage of up to 35% w/w of the total weight of the blend.

In one embodiment of the invention, a third component of the blend is a palm oil or fraction thereof in a percentage of at least 1% w/w of the total weight of the blend. In a preferred embodiment, the third component is in a percentage of at least 2% w/w of the total weight of the blend. In another embodiment, the third component is in a percentage of up to 5% w/w of the total weight of the blend. In even another embodiment, the third component is in a percentage of up to 4% w/w of the total weight of the blend.

In a specific embodiment of the invention, the first component of the blend is a palm oil or fraction thereof selected from raw palm oil and RBD palm oil. In a specific embodiment of the invention, the second component of the blend is a palm oil fraction. In a specific embodiment of the invention, the third component of the blend is a hydrogenated palm oil or fraction thereof.

In a more specific embodiment of the invention, the first component of the blend is RBD palm oil, the second component is palm stearin, and the third component is fully hydrogenated palm oil.

In another embodiment of the invention, there is a fourth and even a fifth component on the blend, wherein the fourth and fifth components are palm oil or fractions thereof in a percentage of up to 5% of the total weight of the blend.

The second step of the process of obtaining a CBE as defined herein is the interesterification of the blend obtained in first step above described. The interesterification can be chemical or enzymatic. In a preferred embodiment of the invention, chemical interesterification is used in the second step of the process herein defined.

The chemical interesterification can be mediated by different catalysts including, but not limiting to, alkali metals such as sodium, potassium, and their alloys, and alkoxides such as sodium methylate or sodium ethoxide. In a preferred embodiment of the invention, the catalyst employed in the second step of the process herein defined is sodium methylate.

In a particular embodiment of the invention, the sodium methylate to be employed in the interesterification step is determined based on the physicochemical characterization of the blend, wherein the measured physicochemical parameters are the free fatty acids, peroxide index, and humidity.

The chemical interesterification is carried out for at least 20 minutes and up to 60 minutes. Particularly, the chemical interesterification is carried out for 30 to 50 minutes, wherein the triglyceride formation is monitored.

The chemical interesterification process is stopped by neutralization of the reaction. Particularly, and without limitation, citric acid can be used as neutralizing compound.

In a particular embodiment of the invention, the blend obtained in the first step of the above process must be dried before the interesterification process.

The third step of the process of obtaining a CBE as defined herein is the refining of the interesterified blend. The refining process includes, but without limitation, bleaching and deodorizing processes as known in the state or art.

In a particular embodiment of the invention, neutral clay is used in a bleaching process to remove coloring material and impurities.

In another embodiment of the invention, the deodorization process involves a heating step, wherein the composition is taken up to a temperature of at least 200°C for removing free fatty acids and elimination odors, thus having a neutral sensory.

In an embodiment of the invention, at least one of bleaching or deodorizing is made on the refining step of the process of the invention. In another embodiment of the invention, both bleaching and deodorizing is made on the refining step of the process of the invention.

From the process herein described a CBE is obtained with specific fatty acid and triglyceride profile which confers the desired main features to the product.

The CBE of the invention exhibits the following fatty acids profile: C12:0 at up to 0.5% w/w of the total weight of the equivalent, C14:0 at up to 1% w/w of the total weight of the equivalent, C16:0 from 39% to 48% w/w of the total weight of the equivalent, C18:0 from 4.7% to 5.8% w/w of the total weight of the equivalent, C18:1 from 34% to 42% w/w of the total weight of the equivalent, C18:2 from 7.5% to 9.5% w/w of the total weight of the equivalent.

The CBE of the invention also comprises the following triglyceride profile: PPP from about 11% to about 13% w/w of the total weight of the equivalent; POP from about 25% to about 30% w/w of the total weight of the equivalent; POS from about 5% to about 7% w/w of the total weight of the equivalent; SOO from about 1.5% to about 5% w/w of the total weight of the equivalent; and SOS from about 0.1% to about 2.5% w/w of the total weight of the equivalent.

Likewise, a desirable solid structure for the CBE is obtained by the process of the invention thanks to the combination of the steps of the process with the final triglyceride profile. The CBE of the invention has a crystalline structure and a triglyceride profile such that it is miscible with other CBEs and even cocoa butter, and it also confers desirable palatability and appearance to the final chocolate product.

Accordingly, the CBE of the invention is suitable as a cocoa butter alternative in the production of chocolates and the like. Likewise, the CBE of the invention is suitable as an extender of cocoa butter or equivalents thereof. When used as CBE extender in the production of chocolates, e.g., dark chocolate, milk chocolate, and the like, the triglyceride profile of the chocolate is: PPP at up to about 1%, POP at between about 19% and about 23%, POS at between 37% and between 42%, SOO at between 2.5% and between 5%, and SOS at between 20% to between 25%.

### EXAMPLES

### Example 1. Obtaining process of one modality of the invention

A process for obtaining a CBE as herein described is executed, specifically, the following steps:
1. Blending RBD palm oil, palm stearin and fully hydrogenated palm oil, wherein the RBD palm oil is at 82% w/w of the total weight of the blend, the palm stearin is at 15% w/w of the total weight of the blend and the fully hydrogenated palm oil is at 3% w/w of the total weight of the blend.
2. Drying the obtained blend and determining the physicochemical parameters thereof.
3. Carrying out the chemical interesterification of the dried blend with sodium methylate. The amount of sodium methylate to be added is calculated in relation to the physicochemical parameters of the blend, wherein the measured parameters are free fatty acids, peroxide index, and humidity of the blend, and wherein said parameters can't be more than 0.3% w/w.
   The reaction time of the interesterification is between 30 and 50 minutes, which will depend on the formation of triglycerides.
4. Neutralizing the composition with citric acid to stop the reaction.
5. Bleaching the interesterified composition with a neutral clay to remove coloring material and impurities for about 30 minutes, and then filtering the clay from the composition.
6. Deodorizing the composition by heating at least at 200 °C.

From the above process, a CBE is obtained, which is suitable as an extender for other CBEs known in the market.

### Example 2. Characterization of an exemplary CBE

The characterization of the CBEs obtained by the process of Example 1 is the following:

**Table 1. Fatty acid profile of the CBEs obtained from the process of Example 1**

| **FATTY ACID** | **CONTENT IN COMPOSITION (%w/w of the total composition)** |
|---|---|
| C12:0 | Up to 0.5 |
| C16:0 | 39-48 |
| C18:0 | 4.7-5.8 |
| C18:1 | 34-42 |
| C18:2 cis | 7.5-9.5 |
| C18:3 alpha | Up to 0.5 |
| Saturated | 50-55 |
| Monounsaturated | 36-40 |
| Polyunsaturated | 8-10 |
| Trans | 0-1 |

**Table 2.Triglyceride profile of the CBEs obtained from the process of Example 1**

| **TRIGLYCERIDE** | **CONTENT IN COMPOSITION (%)** |
|---|---|
| PPP | 11-13 |
| POP | 25-30 |
| POS | 5-7 |
| SOO | 1.5-5 |
| SOS | 0.1-2.5 |

**Table 3. Physicochemical parameters of the CBEs obtained from the process of Example 1**

| **PARAMETER** | **VALUE** |
|---|---|
| Peroxide value*, MeqO2/kg | 1.0 max. |
| Free fatty acids as oleic*, % | 0.1 max. |
| Moisture and volatile matter*, % | 0.05 max. |
| Iodine Value*, cgl2/g | 45.3-55.3 |

In addition, an exemplary CBE is characterized (herein and after named as *Extender*), and its features are compared to commercial products for making chocolate.

**Table 4: Fatty acid profile of an exemplary CBE and commercial products**

| **Fatty acid** | **Cocoa butter** | **CBE based on PMF and Shea from Loders** | **Extender** |
|---|---|---|---|
| Saturated | 62.34 | 63.75 | 52.70 |
| Monounsaturated | 34.29 | 32.90 | 37.74 |
| Polyunsaturated | 3.36 | 3.34 | 9.55 |
| Trans | 0.00 | 0.12 | 0.31 |

**Table 5: Triglyceride profile of an exemplary CBE and commercial products**

| **Trygliceride** | **Cocoa butter** | **CBE based on PMF and Shea from Loders** | **Extender** |
|---|---|---|---|
| **PPP** | 0.3 | 1.6 | 12.5 |
| **POP** | 19.7 | 41.2 | 27.6 |
| **POS** | 40.3 | 10.2 | 5.9 |
| **SOO** | 3.1 | 2.1 | 1.8 |
| **SOS** | 22.5 | 29.7 | 0.6 |

### Example 3. Use of the CBE of Example 2 in the preparation of dark chocolate

The CBE of the invention was used as an extender in combination with a CBE already available in the market to produce dark chocolate. Different proportions of CBE and the extender of the invention were evaluated, and the correspondent fat profiles are defined below.

**Table 4. Fatty acid profile of dark chocolate**

| **FATTY ACID** | **CONTENT IN THE DARK CHOCOLATE (% OF TOTAL FAT)** | | | | |
|---|---|---|---|---|---|
| | **Referenc e*** | **20% Extender + 80% CBE** | **30% Extender + 70% CBE** | **40% Extender + 60% CBE** | **60% Extender + 40% CBE** |
| **Saturated** | 61.6 | 61.5 | 61.4 | 61.4 | 61.2 |
| **Mono-unsaturated** | 32.8 | 32.8 | 32.8 | 32.8 | 32.9 |
| **Poly-unsaturated** | 5.6 | 5.7 | 5.8 | 5.8 | 5.9 |
| **Trans** | 0.0 | 0.0 | 0.0 | 0.0 | 0.0 |

| | | | | | |
|---|---|---|---|---|---|
| *Reference values of Typical dark chocolate formula according to CODEX STAN 87-1981 4 2.1.7.4.3 | | | | | |

**Table 5. Triglyceride profile of dark chocolate**

| **TRIGLYCERIDE** | **CONTENT IN THE DARK CHOCOLATE (%OF TOTAL FAT)** | | | | |
|---|---|---|---|---|---|
| | **Referenc e*** | **20% Extender + 80% CBE** | **30% Extender + 70% CBE** | **40% Extender + 60% CBE** | **60% Extender + 40% CBE** |
| **PPP** | 0.6 | 0.7 | 0.7 | 0.7 | 0.9 |
| **POP** | 22.0 | 21.9 | 21.4 | 21.2 | 21.1 |
| **POS** | 40.0 | 40.1 | 37.3 | 37.9 | 39.7 |
| **SOO** | 3.4 | 3.4 | 3.3 | 3.4 | 3.8 |
| **SOS** | 23.3 | 23.3 | 22.2 | 22.2 | 21.7 |

| | | | | | |
|---|---|---|---|---|---|
| *Reference values of Typical dark chocolate formula according to CODEX STAN 87-1981 4 2.1.7.4.3 | | | | | |

### Example 4. Use of the CBE of Example 2 in the preparation of milk chocolate

The CBE of the invention was also used as an extender in combination with a CBE already available in the market to produce milk chocolate. Different proportions of CBE and the extender of the invention were evaluated, and the correspondent fat profiles are defined below.

**Table 6. Fatty acid profile of milk chocolate**

| **FATTY ACID** | **CONTENT IN THE MILK CHOCOLATE (%OF TOTAL FAT)** | | | |
|---|---|---|---|---|
| | **Reference**** | **20% Extender + 80% CBE** | **40% Extender + 60% CBE** | **60% Extender + 40% CBE** |
| **Saturated** | 63.3 | 62.5 | 62.1 | 62.5 |
| **Mono-unsaturated** | 33.1 | 33.5 | 33.5 | 33.5 |
| **Poly-unsaturated** | 3.6 | 4.0 | 4.5 | 4.0 |
| **Trans** | 0.1 | 0.1 | 0.0 | 0.1 |

| | | | | |
|---|---|---|---|---|
| **Reference values of Typical milk chocolate formula according to CODEX STAN 87-1981 4 2.1.7.4.3 | | | | |

**Table 7. Triglyceride profile of milk chocolate**

| **TRIGLYCERIDE** | **CONTENT IN THE MILK CHOCOLATE (%OF TOTAL FAT)** | | | |
|---|---|---|---|---|
| | **Reference**** | **20% Extender + 80% CBE** | **40% Extender + 60% CBE** | **60% Extender + 40% CBE** |
| **PPP** | 0.6 | 0.8 | 0.9 | 1.0 |
| **POP** | 23.4 | 23.5 | 23.7 | 22.6 |
| **POS** | 36.4 | 37.9 | 36.9 | 32.0 |
| **SOO** | 2.4 | 3.2 | 3.2 | 3.7 |
| **SOS** | 3.0 | 3.4 | 3.1 | 3.2 |

| | | | | |
|---|---|---|---|---|
| **Reference values of Typical milk chocolate formula according to CODEX STAN 87-1981 4 2.1.7.4.3 | | | | |

As noted in Examples 3 and 4, when using fat compositions having a mixture of CBE and the CBE of Example 2 as an extender, there is no significant differences on the fat profiles in comparison to the reference values for both dark chocolate and milk chocolate. This means that no significative differences regarding appearance, palatability and other organoleptic features are expected in the final chocolate.

In addition, and with the triglyceride profiles of the CBE of the invention, no eutectics are formed, thus the desired texture and appearance in the final chocolate products are successfully achieved.

Moreover, and considering that the CBEs known in the market have high manufacturing costs associated to the presence of exotic oils and significant losses of materials during their manufacture, the use of the CBE of the invention enables to reduce manufacturing costs of the final chocolate by reducing the need of using higher quantities of other expensive CBEs.

## Claims

1. A process for obtaining a cocoa butter equivalent **characterized by** the following step:
a. Blending one or more of the components, wherein each component is a palm oil or fractions thereof;
b. Chemical interesterification; and
c. Physical refining of the interesterified product.

2. The process of claim 1, wherein at least three palm oils or fractions thereof are blended.

3. The process of claim 1 or 2, wherein the palm oils or fractions thereof are selected from raw palm oil, refined, bleached, and deodorized (RBD) palm oil, palm stearin, palm olein, partially hydrogenated raw palm oil, partially hydrogenated RBD palm oil, partially hydrogenated palm stearin, fully hydrogenated raw palm oil, fully hydrogenated RBD palm oil, or fully hydrogenated palm stearin.

4. The process of any one of claims 1 to 3, wherein the first component is a palm oil or fractions thereof in a percentage of at least 60% and up to 85% w/w of the total weight of the blend.

5. The process of any one of claims 1 to 4, wherein the second component is a palm oil or fractions thereof in a percentage of at least 5% and up to 35% w/w of the total weight of the blend.

6. The process of any one of claims 1 to 5, wherein the third component is a palm oil or fractions thereof in a percentage of at least 1% and up to 4% w/w of the total weight of the blend.

7. The process of any one of claims 4 to 6, wherein the first component is RBD palm oil, the second component is palm stearin, and the third component is fully hydrogenated palm oil.

8. The process of any one of claims 1 to 7, wherein the catalyst of the interesterification step is selected from alkali metals or alloys thereof, and alkoxides.

9. The process of claim 8, wherein the catalyst is an alkoxide.

10. The process of claim 9, wherein the alkoxide is sodium methoxide.

11. The process of any one of claims 1 to 10, wherein the interesterification is stopped by neutralization.

12. The process of claim 11, wherein citric acid is used as neutralizing agent.

13. The process of any one of claims 1 to 12, wherein the refining step includes bleaching and/or deodorizing the composition.

14. The process of claim 13, wherein the bleaching is made with neutral clay.

15. The process of claim 13, wherein the deodorizing is carried out at a temperature of at least 200°C.

16. The process of any one of claims 1 to 15, wherein the blend obtained in step a) is dried before step b).

17. A cocoa butter equivalent obtained by the process of any one of claims 1 to 16.

18. A cocoa butter equivalent having the following fatty acid profile:
C12:0 at up to about 0.5% w/w of the total weight of the equivalent;
C14:0 at up to about 1% w/w of the total weight of the equivalent;
C16:0 from about 39% to about 48% w/w of the total weight of the equivalent;
C18:0 from about 4.7% to about 5.8% w/w of the total weight of the equivalent;
C18:1 from about 34% to about 42% w/w of the total weight of the equivalent; and
C18:2 from about 7.5% to about 9.5% w/w of the total weight of the equivalent.

19. The cocoa butter equivalent of claim 18, having the following triglyceride profile:
PPP from about 11% to about 13% w/w of the total weight of the equivalent;
POP from about 25% to about 30% w/w of the total weight of the equivalent;
POS from about 5% to about 7% w/w of the total weight of the equivalent;
SOO from about 1.5% to about 5% w/w of the total weight of the equivalent; and
SOS from about 0.1% to about 2.5% w/w of the total weight of the equivalent.

20. The cocoa butter equivalent of any one of claims 17 to 19 for use as an extender of cocoa butter or equivalents thereof.
